# EUROPEAN PATENT SPECIFICATION

(11) **EP 4 530 865 B1**
(45) Date of publication and mention of the grant of the patent: **20.05.2026**
(21) Application number: 24202112.9
(22) Date of filing: 24.09.2024
(51) Int. Cl.: G06F 12/14, G06F 9/30

(54) **PROCESSORS EMPLOYING DEFAULT TAGS FOR WRITES TO MEMORY FROM DEVICES NOT COMPLIANT WITH A MEMORY TAGGING EXTENSION AND RELATED METHODS**
PROZESSOREN MIT STANDARDETIKETTEN ZUM SCHREIBEN AUF SPEICHER VON VORRICHTUNGEN, DIE NICHT MIT EINER SPEICHERMARKIERUNGSERWEITERUNG KONFORM SIND, UND ZUGEHÖRIGE VERFAHREN
PROCESSEURS UTILISANT DES ÉTIQUETTES PAR DÉFAUT POUR ÉCRITURES DANS UNE MÉMOIRE À PARTIR DE DISPOSITIFS NON CONFORMES À UNE EXTENSION D'ÉTIQUETAGE DE MÉMOIRE ET PROCÉDÉS ASSOCIÉS

(30) Priority: 29.09.2023 US 202318478645
(43) Date of publication of application: 02.04.2025
(73) Proprietor: Ampere Computing LLC, Santa Clara, California 95054 (US)
(72) Inventor: Chaffin, Benjamin, Santa Clara, 95054 (US); Shivnandan, Kaushik, Santa Clara, 95054 (US); Erler, Matthew, Santa Clara, 95054 (US)
(74) Representative: Papula Oy

(56) References cited:
- GB-A- 2 616 643
- US-B2- 11 573 907

## Description

### Field of the Disclosure

The technology of the disclosure relates to computing systems employing a memory system employing a memory tagging capability.

### Background

The internet provides access to millions of computing devices for personal, business, and government applications, cloud computing, and cloud storage. The personal, financial, and medical information of individuals, as well as the confidential information of businesses, governments, and other non-government organizations, are stored online and are expected to be readily accessible whenever needed by an authorized person. At the same time, such information is expected to be secure from all unauthorized attempts to access it. Unfortunately, unauthorized access has been achieved in many ways. One way in which online data can be accessed without permission is by exploiting weaknesses in the computing devices that are used to access, process, and store data. A well-known example of such weaknesses is the ability to access memory locations without authorization. Specifically, hostile programs can take advantage of unintended features present within instructions and architectures of processing devices to access memory locations that are not intended to be accessible without permission. Designers of processing devices and their architectures have developed numerous techniques and mechanisms for avoiding unauthorized or unintended access to memory locations. One example of such techniques, in a class of processors based on the ARM^{®} architecture, designed and licensed by ARM Ltd., is known as a memory tagging extension (MTE), which is designed to detect memory safety violations. MTE employs "tag" bits that are stored in memory associated with a memory address. However, some devices that are coupled to the same memory as a processing device including MTE may not be MTE compliant.

US 11573907 B2 discloses tag guarded memory access involving checking first a default tag matching the address tag, followed, in case of a negative tag matching result, by matching the assigned tag bits to the memory address with the tag bits of a memory access instruction.

### Summary

The invention is set out in the appended set claims. The dependent claims set out particular embodiments. Aspects disclosed herein include processors employing default tags for writes to memory from devices not compliant with a memory tagging extension (MTE). Related methods of employing default tags for writes to memory from devices not compliant with MTE are also disclosed. In processors that include MTE, executing a memory access instruction to access a target memory address in a memory circuit includes obtaining, from the memory circuit, first tag bits associated with the memory address and comparing the first tag bits to second tag bits in the memory access instruction. The first tag bits may be accessed together with the data in a memory access operation. The memory circuit cannot remain MTE compliant if external devices that store data in the memory circuit (e.g., by direct-memory access (DMA)) do not maintain the first tag bits. An exemplary processor disclosed herein provides default tag bits to be employed when external devices not implementing MTE access the memory circuit. In such cases, the default tag bits are stored with the data (e.g., in a metadata field). During execution of a memory access instruction, the first tag bits are compared to the second tag bits and, when there is a mismatch, the first tag bits may be compared to the default tag bits. In some examples, the processing circuit includes a mode indicator indicating whether default tag bits are employed. In a first mode indicated by the mode indicator, in which the default tag bits are not employed, an exception signal may be generated in response to a mismatch between the first tag bits and the second tag bits. In a second mode indicated by the mode indicator, in which the default tag bits are employed, in response to a mismatch between the first tag bits and the second tag bits, the first tag bits are further compared to the default tag bits and an exception signal may be generated in response to a mismatch between the first tag bits and the default tag bits.

In this regard, in one exemplary aspect, a system including a memory circuit is provided. The system further includes a processing circuit coupled to the memory circuit and configured to execute a memory access instruction to access a first memory address of the memory circuit. In response to the processing circuit executing the memory access instruction, the processing circuit is further configured to receive, from the memory circuit, first tag bits associated with the first memory address; determine that the first tag bits are different than second tag bits in the memory access instruction; and in response to a mode indicator indicating a first mode, compare the first tag bits to the default tag bits.

In another exemplary aspect, a processing circuit is configured to couple to a memory circuit and is configured to execute a memory access instruction to access a first memory address of the memory circuit. In response to the processing circuit executing the memory access instruction, the processing circuit is further configured to receive, from the memory circuit, first tag bits associated with the first memory address; determine that the first tag bits are different than second tag bits in the memory access instruction; and in response to a mode indicator indicating a first mode, compare the first tag bits to the default tag bits.

In another exemplary aspect, a method in a system including a processing circuit coupled to a memory circuit is provided. The method includes executing a memory access instruction to access a first memory address of the memory circuit. In response to the processing circuit executing the memory access instruction, the method further includes accessing first tag bits associated with the first memory address; determining that the first tag bits are different than second tag bits in the memory access instruction; and, in response to a mode indicator indicating a first mode, comparing the first tag bits to the default tag bits.

Those skilled in the art will appreciate the scope of the present disclosure and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the disclosure and, together with the description, serve to explain the principles of the disclosure.
Figure 1 is a diagram of an exemplary system including a processing circuit configured to access a memory circuit in which one of first tag bits and default tag bits are associated with each memory location and are compared to address tag bits in a memory instruction;
Figure 2 is a diagram of a memory circuit in which tag bits stored in association with each memory address may correspond to address tag bits or default tag bits;
Figure 3 is a flowchart of a method determining whether tag bits associated with a memory address match address tag bits or default tag bits;
Figure 4 is a diagram of an exemplary processing circuit configured to couple to a memory circuit and compare tag bits associated with accessed memory addresses to address tag bits or default tag bits; and
Figure 5 is a block diagram of an exemplary computer system that includes a processor that includes a plurality of CPU cores coupled to peripheral devices and other resources including a memory system, wherein the CPU cores each include a processing circuit configured to determine whether tag bits associated with memory locations match address tag bits or default tag bits.

### Detailed Description

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Aspects disclosed herein include processors employing default tags for writes to memory from devices not compliant with a memory tagging extension (MTE). Related methods of employing default tags for writes to memory from devices not compliant with MTE are also disclosed. In processors that include MTE, executing a memory access instruction to access a target memory address in a memory circuit includes obtaining, from the memory circuit, first tag bits associated with the memory address and comparing the first tag bits to second tag bits in the memory access instruction. The first tag bits may be accessed together with the data in a memory access operation. The memory circuit cannot remain MTE compliant if external devices that store data in the memory circuit (e.g., by direct-memory access (DMA)) do not nevertheless maintain the first tag bits. An exemplary processor disclosed herein provides default tag bits to be employed when external devices not implementing MTE access the memory circuit. In such cases, the default tag bits are stored with the data (e.g., in a metadata field). During execution of a memory access instruction, the first tag bits are compared to the second tag bits and, when there is a mismatch, the first tag bits may be compared to the default tag bits. In some examples, the processing circuit includes a mode indicator indicating whether default tag bits are employed. In a first mode indicated by the mode indicator, in which the default tag bits are not employed, an exception signal may be generated in response to a mismatch between the first tag bits and the second tag bits. In a second mode indicated by the mode indicator, in which the default tag bits are employed, in response to a mismatch between the first tag bits and the second tag bits, the first tag bits are further compared to the default tag bits and an exception signal may be generated in response to a mismatch between the first tag bits and the default tag bits.

Architectures for processors and processing circuits have been developed to include a memory tagging feature, which may be known as a memory tagging extension (MTE), to improve data security in a wide range of devices and computing systems. Processors and processing circuits that include MTE include those with some architectures provided by ARM Ltd., which may be referred to as "ARM architectures." MTE is an acronym that may be specifically used in reference to ARM architectures but is not intended to be so limiting in this context, and generally refers to the memory tagging capability described herein. That is, while the acronym "MTE" may be employed herein, other memory tagging features by ARM Ltd. or other designers or providers of processors, processing circuits, and/or architectures are also included in the scope of the acronym MTE as used herein. MTE includes employing "tags" or "tag bits" (e.g., metadata) associated with each cache line address in a memory circuit ("memory"). The tag bits may be used to verify that accesses to a memory address are authorized. The tag bits may be determined, by a tag creation circuit for example, in the processor or a memory controller when a memory address is allocated for data storage. Use of the tag bits may be determined by each process, for example. Alternatively or additionally, certain regions of memory may be provided the additional level of data security made possible by MTE. However, even those regions that do not include additional data security may implement the tag bits in a processing circuit employing the MTE.

Once values of the tag bits are determined, two copies are maintained. The first tag bits (memory tag bits) are stored in association with the memory address in the memory circuit. MTE specific instructions are used to set or modify the first tag bits. In addition, second tag bits (address tag bits) are tracked by software which allocated the memory region, and are used to obtain access to the data at the memory address. As described in more detail below, the first tag bits are retrieved (e.g., from the memory circuit) along with the data each time the data in the cache line (e.g., at that memory address) is accessed (read or written). The second tag bits are included in a memory address of a memory access instruction. MTE increases data security because, during memory access instructions, the first tag bits stored in the memory circuit are compared to second tag bits that are included in the target memory address of a memory access instruction. In this manner, the tag bits can be used to verify that the software thread or process attempting to access the data has permission or authorization to access the data. This feature prevents, for example, a memory access instruction directed to a first cache line from overlapping into a second protected cache line. The "tags" employed in MTE are specific bit patterns (sometimes referred to as "colors") attached to particular regions of memory (16B aligned blocks in the specific case of the ARM MTE architecture). In this manner, different blocks of data belonging to a process and stored in adjacent memory locations can be marked with respective "colors" (tags) to ensure that only that the process cannot access the wrong data. For example, data belonging to a first memory allocation block and stored in a first memory location can be marked with a "color" (tag) associated with that allocation block to ensure that a memory access which is intended to access a second allocation block with a different color will not succeed.

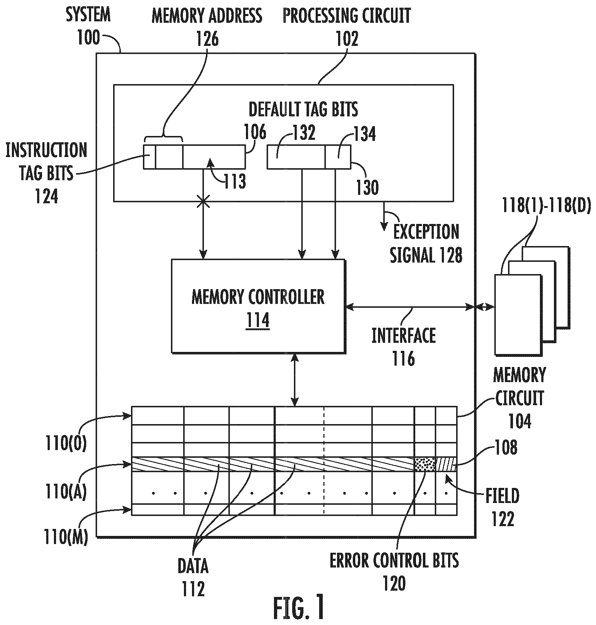

Figure 1 is a diagram of a system 100 including a processing circuit 102 and a memory circuit 104 that employs a memory access extension (MTE). The processing circuit 102 is configured to execute a memory access instruction 106 to access a memory address in the memory circuit 104 and also access first memory tag bits 108 associated with the memory address, which corresponds to one of cache lines 110(0)-110(M). The processing circuit 102 may employ the first memory tag bits 108 to increase security of data stored in the memory circuit 104 according to an MTE, such as an MTE of an ARM^{®} architecture. The memory access instruction 106 is representative of any type of memory access instructions executed by the processing circuit 102 to either read existing data 112 from the memory circuit 104 or to write new data 113 to the memory circuit 104. Whether the memory access instruction 106 is configured to read or write data at the memory address, execution of the memory access instruction first includes reading the first memory tag bits 108. A memory write instruction may also include reading the existing data 112 stored at the memory address before the new data 113 is written to the memory circuit 104.

The system 100 includes a memory control circuit 114 ("memory controller 114") coupled between the memory circuit 104 and the processing circuit 102. The memory controller 114 also includes an interface 116 configured to couple to one of a plurality of external devices 118(1)-118(D), which are capable of employing a direct memory access (DMA) capability to access the data 112 in the memory circuit 104 without the involvement of the processing circuit 102. In this regard, the memory controller 114 may include a DMA control circuit (not shown). In an example not shown, the memory controller 114 may include multiple interfaces 116 that are each configured to couple to one of the external devices 118(1)-118(D).

The memory circuit 104 in Figure 1 may be organized according to the cache lines 110(0)-110(M), each having a number X of bytes for storing the data 112, where M may be any integer depending on the size of the memory circuit 104 and X may be driven by design choices, such as number of instructions to be stored in each of the cache lines 110(0)-110(M). The cache line 110(A) is described herein as a representative example of the cache lines 110(0)-110(M). In addition to the data 112, the X bytes of the cache line 110(A) include at least one or more additional bytes to store parity and/or error correction control (ECC) bits 120 ("error control bits 120"). In the example in Figure 1, the cache line 110(A) also includes a field 122 for storing the memory tag bits 108. In some examples, a number of the error control bits 120 stored in each one of the cache lines 110(0)-110(M) is reduced to make room for the memory tag bits 108. Such reduction in the error control bits 120 may reduce data reliability in the memory circuit 104. The first tag bits are co-located with the data, so that they are always accessed with the data. Accordingly, DMA writes to a memory location are detected because they are likely to overwrite the first tag bits.

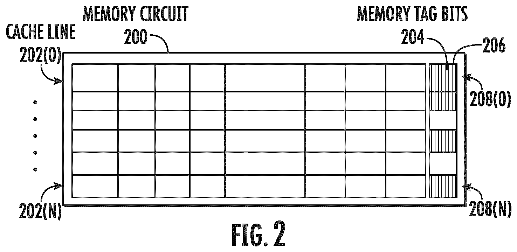

In this regard, referring briefly to Figure 2, a memory circuit 200 is another example supporting the MTE and may be used in place of the memory circuit 104 in the system 100 in Figure 1. The memory circuit 200 includes cache lines 202(0)-202(N). The memory circuit 200 differs from the memory circuit 104 with regard to the storage of memory tag bits 204, which correspond to the memory tag bits 108 in Figure 1. Here, rather than occupying storage that may alternatively be used for error control bits 120, to maintain a level of error correction capability, the memory circuit 200 includes an additional storage circuit 206 including fields 208(0)-208(N) that each provide storage for the memory tag bits 204 associated with one of the cache lines 202(0)-202(N). In an example in which the system 100 is modified to include the memory circuit 200, there may be a higher level of error protection than in the system 100 employing the memory circuit 104 in Figure 1. In some examples, a corresponding one of the fields 208(0)-208(N) is accessed in parallel with the data 112 of an associated one of the cache lines 202(0)-202(N). Alternatively, the fields 208(0)-208(N) may be accessed separately.

Returning to Figure 1, the external devices 118(1)-118(D) coupled to the memory circuit 104 may not support the MTE employed in the processing circuit 102. In addition, although not shown here, other internal devices may have access to the memory circuit 104 but are configured for MTE. Consequently, when data 112 is written to the memory circuit 104 from one of the external devices 118(1)-118(D), the memory tag bits 108 may remain unchanged or may be updated to have a value that is not known to the software or processes having authority to access such data 112. Subsequently, if a memory access instruction employing the MTE accesses the cache line 110(A) and compares the memory tag bits 108 to second address tag bits 124 included in a target memory address 126 of the memory access instruction 106 for accessing the cache line 110(A), there may be a mismatch, causing an exception signal 128 to be generated. The exception signal 128 may be a fault indication, an exception, or any other type of signal indicating that the first, memory tag bits 108 have an unexpected value. However, the exemplary processing circuit 102 also includes a default tag register 130, which includes default tag bits 132 and a default tag mode indicator 134 that is referred to in response to a mismatch between the memory tag bits 108 and the second address tag bits 124. That is, in response to determining that the memory tag bits 108 are different than the address tag bits 124, the processing circuit 102 checks the default tag mode indicator 134 for an indication of a first mode or a second mode. It should be understood that the default tag register 130 is merely an example of a circuit for storing the default tag bits 132 and the default tag mode indicator 134, which may be stored in different registers or in memory locations.

The default tag mode indicator 134 in Figure 1 indicates one of the first mode of the processing circuit 102, in which the default tag bits 132 are employed, and the second mode of the processing circuit 102, in which the default tag bits 132 are not employed. In other words, the default tag mode indicator 134 in Figure 1 indicates whether a default tag mode is enabled or disabled in the processing circuit 102, which determines whether the memory tag bits 108 are compared to the default tag bits 132. In some examples, the memory tag bits 108 may always be compared to the default tag bits 132 and the results of the comparison are ignored in the second mode.

A value or state of the default tag mode indicator 134 is provided to the memory controller 114. When the memory controller 114 receives, from one of the external devices 118(1)-118(D), new data 113 to be stored in the memory circuit 104, and the default tag mode indicator 134 indicates that the processing circuit 102 is operating in the first mode (e.g., the default tag bits are enabled), the memory controller 114 sets the memory tag bits 108 in the field 122 of the accessed cache line 110(A) to the value of the default tag bits 132. As noted, in this example the default tag bits 132 are stored in the default tag register 130, so a value of the default tag bits 132 may be configurable, including but not limited to being determined by firmware that writes to the default tag register 130. For example, in the system 100, the memory tag bits 108 may be four (4) (or more or less) binary bits having any binary value from b'0000' (decimal 0) to b'1111 (decimal 15) and the default tag bits 132 are set to one of these values, such as b'1111'. Alternatively, the default tag bits 132 may be a predetermined (e.g., hard-wired) value (e.g., combination of binary digits) always used in the first mode, when default tags are enabled. In the first mode, the processing circuit 102 may not use the value of the default tag bits 132 as one of the values of the memory tag bits 108 in the field 122 in the cache lines 110(0)-110(M).

In some architectures that implement MTE, supervisory software identifies tags that are or are not available for use. In the processing circuit 102, in the first mode, the value selected as the default tag may be identified as also not available for use.

In this example, in response to executing the memory access instruction 106, the processing circuit 102 receives the memory tag bits 108 stored in the memory circuit 104 in association with the cache line 110(A) at the memory address 126 that is the target of the memory access instruction 106. The processing circuit 102 determines whether the memory tag bits 108 match the address tag bits 124 in the memory access instruction 106. The processing circuit 102 also compares the memory tag bits 108 to the default tag bits 132 in the default tag register 130 in response to an indication of being in the first mode (e.g., an indication provided by the default tag mode indicator 134). The processing circuit 102 generates the exception signal 128 based on whether the memory tag bits 108 match one of the address tag bits 124 and the default tag bits 132.

In more detail, if the memory tag bits 108 match the address tag bits 124, the memory access instruction is completed normally. If the memory tag bits 108 do not match the address tag bits 124, the indication of the default tag mode indicator 134 is checked, and in response to an indication of the first mode, the memory tag bits 108 are compared to the default tag bits 132. In the first mode, if the memory tag bits 108 match the default tag bits 132, the memory access instruction may be completed normally. Additionally, or alternatively, an alert may be generated to note that default tag bits are employed in the targeted memory location. In the first, if the memory tag bits 108 are different than the default tag bits 132, the exception signal 128 is generated.

If the memory tag bits 108 do not match the address tag bits 124 and the default tag mode indicator 134 indicates that the processing circuit 102 is in the second mode, the exception signal 128 is generated independent of the default tag bits 132. In some examples, a determination of whether the memory tag bits 108 match the default tag bits 132 is only made in the first mode. In other examples, such determination is made during every memory access operation, but the result may be ignored in the second mode. The second mode may be employed, for example, when the system 100 is not coupled to any external devices, or not coupled to any devices that are not MTE compliant.

In the first mode, if the memory tag bits 108 do not match the address tag bits 124 but the memory tag bits 108 do match the default tag bits 132, the exception signal 128 is not generated. As noted above, however, an alert may be generated to track the memory locations in which default tag bits 132 have been employed.

An example of when the memory tag bits 108 may not match the address tag bits 124 is when the data 112 accessed by the memory access instruction 106 executed in the processing circuit 102 was originally stored in the memory circuit 104 by one of the external devices 118(1)-118(D), which do not support the MTE. When the data is written by one of the external devices 118(1)-118(D), the memory controller 114 stores the value of the default tag bits 132 as the memory tag bits 108 in the field 122. Thus, based on the memory tag bits 108 mismatching the address tag bits 124 but matching the default tag bits 132, the memory controller 114 recognizes an instance of data written into memory circuit 104 by the external devices 118(1)-118(D) and processes the data 112 rather than generating an exception. As noted, an alert may be generated in such situations for tracking purposes.

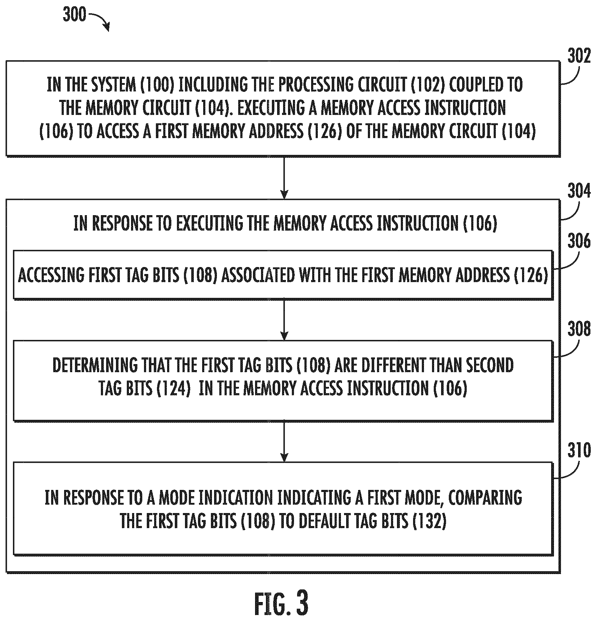

Figure 3 is a flow chart illustrating a method 300 in the system 100 including the processing circuit 102 coupled to the memory circuit 104. The method 300 includes executing a memory access instruction 106 to access a first memory address 126 of the memory circuit 104 (block 302). The method 300 further includes, in response to executing the memory access instruction 106 (block 304), accessing first tag bits 108 associated with the first memory address 126 (block 306) and determining that the first tag bits 118 are different than second tag bits in the memory access instruction 106 (block 308). The method 300 further includes, in response to a mode indication indicating a first mode, comparing the first tag bits 108 to the default tag bits 132 (block 310).

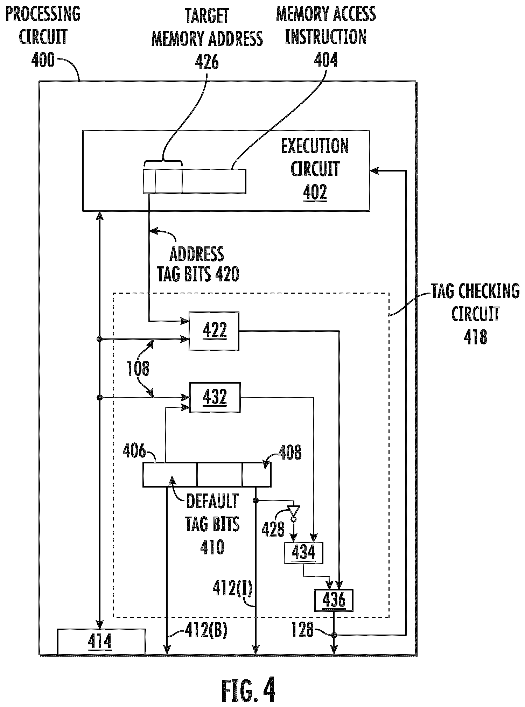

Figure 4 is a diagram of a processing circuit 400, which may be the processing circuit 102 in Figure 1 and is described with continued reference to Figure 1, to provide a non-limiting example of circuits in the processing circuit 400 that may be employed to implement the default tag mode. Features common to Figure 1 and Figure 4 may be identified in Figure 4 with labels shown in Figure 1. The processing circuit 400 includes an execution circuit 402 configured to execute or process instructions, including a memory access instruction 404 for accessing the memory circuit 104. The processing circuit 400 includes a default tag register 406 configured to store a default tag mode indicator 408 and default tag bits 410 that correspond to the default tag mode indicator 134 and the default tag bits 132 in Figure 1. The default tag mode indicator 408 indicates one of a first mode, in which the use of default tag bits 132 is enabled, and a second mode in which the use of default tag bits 132 is disabled. In the first mode, the default tag bits 410 are employed by the memory controller 114, as described above, when data is being stored (e.g., by DMA operations) into the memory circuit 104 by external devices that are not MTE compliant. In the second mode, the memory controller 114 does not use the default tag bits 410.

The default tag bits 410 and the default tag mode indicator 408 are provided to the memory controller 114 on outputs 412(B) and 412(I) from the processing circuit 400. The processing circuit 400 also includes a memory interface 414 configured to be coupled to the memory controller 114 in Figure 1. In response to executing the memory access instruction 404, whether reading data from or writing data to the memory circuit 104, and in accordance with the MTE, the memory tag bits 108 associated with the cache line 110(A) at a target memory address 126 may be read from the memory circuit 104 by way of the memory interface 414.

The processing circuit 400 includes a tag checking circuit 418 including a first comparator circuit 422 configured to compare the memory tag bits 108 received from the memory circuit 104, to second address tag bits 420, which correspond to the address tag bits 124 in Figure 1. Although the default tag register 406 is shown within the tag checking circuit 418 in Figure 4, in some examples the default tag mode register 406 may be outside the tag checking circuit 418. In some examples, the default tag bits 410 may be stored in a configuration register of the processing circuit 400. The first comparator circuit 422 determines whether the memory tag bits 108 match the address tag bits 420 based on the comparison. In this context, a "match" occurs if the bits being compared (e.g., the tag bits 108 and the address tag bits 420) are the same (i.e., identical), for example, or have an expected relationship to each other. A mismatch, in which the memory tag bits 108 and the address tag bits 420 do not match, occurs when compared bits are different. For example, a mismatch signal 426 is generated when the memory tag bits 108 are different than the address tag bits 420.

In the example shown in Figure 4, it is assumed that the default tag mode indicator 408 stores a binary "0" in the second mode, when the default tag bits 410 are not employed. The default tag mode indicator 408 is coupled to an inverter 428 that generates a binary "1" in the second mode, which is coupled to an OR gate circuit 434. The output of the OR gate circuit 434 is coupled to an AND gate circuit 436. The mismatch signal 426 (indicating that the memory tag bits 108 are different than the address tag bits 420) is also coupled to the AND gate circuit 436. Thus, the exception signal 128 may be generated in response to the mismatch signal 426 when the processor circuit 400 is in the second mode (e.g., when default tag bits are not used).

On the other hand, in the example shown in Figure 4, it is assumed that the default tag mode indicator 408 stores a binary "1" in the first mode, when the default tag bits 410 are employed. It should be recognized that the default tag mode indicator 408 may use any two values to indicate the first mode and the second mode and the logic circuits would be adjusted accordingly. In this case, the inverter 428 provides a binary "0" to the OR gate circuit 434, so the exception signal 128 is not generated based on only the mismatch signal 426. Rather, the memory tag bits 108 are also compared to the default tag bits 410 by the comparator circuit 432. If there is a mismatch between the memory tag bits 108 and the default tag bits 410, a "1" is provided to the OR gate circuit 434, which is coupled to the AND gate circuit 436, as noted above. Therefore, in the first mode, the exception signal 128 may be generated if the memory tag bits 108 do not match the address tag bits 420 and do not match the default tag bits 410.

The exception signal 128 may cause the processing circuit 400 to take actions such as re-executing the memory access instruction 404, executing an error recovery process, and/or providing the exception signal 128 to a service processor, for example. The specific implementation of logic circuits shown in Figure 4 is just one non-limiting example of how the functions described herein may be provided.

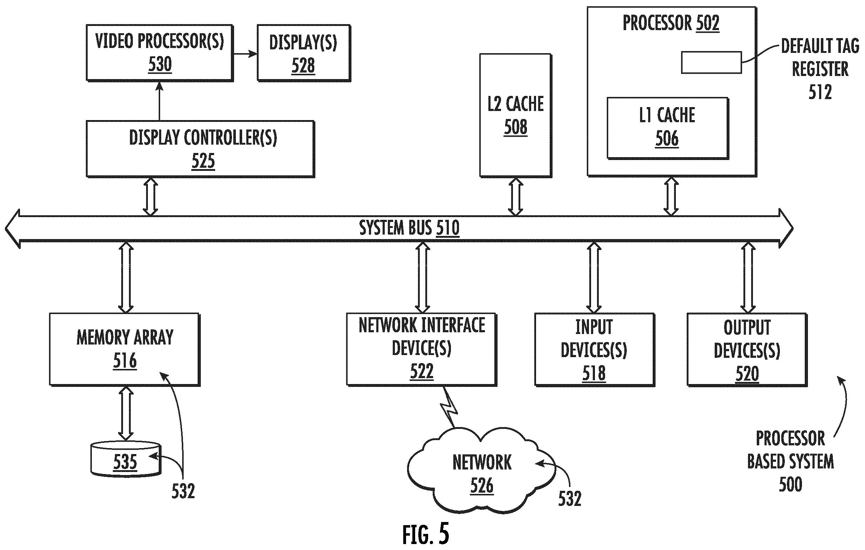

Figure 5 is a block diagram illustrating an example of a processor-based system 500 that can include a processor 502, as a non-limiting example. The processor-based system 500 may be the system 100 in Figure 1 and the processor 502 may be the processing circuit 102 in Figure 1. The processor 502 includes a level one (L1) cache 506 and has access to an L2 cache 508 through communications on a system bus 510. The processor 502 includes a default tag register 512 corresponding to the default tag register 130 in Figure 1.

The system bus 510 may be busy with communications between other devices coupled to the system bus 510. As illustrated in Figure 5, these devices can include the memory array 516. The devices coupled to the system bus 510 may also include one or more input devices 518, one or more output devices 520, one or more network interface devices 522, and one or more display controllers 525, as examples. The input device(s) 518 can include any type of input device, including, but not limited to, input keys, switches, voice processors, etc. The output device(s) 520 can include any type of output device, including, but not limited to, audio, video, other visual indicators, etc. The network interface device(s) 522 can be any device(s) configured to allow an exchange of data to and from a network 526. The network 526 can be any type of network, including, but not limited to, a wired or wireless network, a private or public network, a local area network (LAN), a wireless local area network (WLAN), a wide area network (WAN), a BLUETOOTH^{™} network, and the Internet. The network interface device(s) 522 can be configured to support any type of communications protocol desired.

The processor 502 may also be configured to access the display controller(s) 525 over the system bus 510 to control information sent to one or more displays 528. The display controller(s) 525 sends information to display(s) 528 to be displayed via one or more video processors 530, which process the information to be displayed into a format suitable for the display(s) 528. The display(s) 528 can include any type of display, including, but not limited to, a cathode ray tube (CRT), a liquid crystal display (LCD), a plasma display, a light emitting diode (LED) display, etc.

The memory array 516 of the processor-based system 500 may include a set of computer-readable instructions 532 stored in a non-transitory computer-readable medium 535 (e.g., a memory) that can be accessed by the processor 502 to be executed to perform tasks that require instructions and/or data from the memory array 516. These computer-readable instructions 532 can be stored in the non-transitory computer-readable medium 535. The computer-readable instructions 532 may further be transmitted or received over the network 526 via the network interface device 522, such that the network 526 includes the non-transitory computer-readable medium 535. The computer-readable instructions 532 may further be transmitted or received from the input device 518.

While the non-transitory computer-readable medium 535 is shown in an exemplary embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the processing device and that cause the processing device to perform any one or more of the methodologies of the embodiments disclosed herein. The term "computer-readable medium" shall accordingly be taken to include, but not be limited to, solid-state memories, optical medium, and magnetic medium.

Those of skill in the art will further appreciate that the various illustrative logical blocks, modules, circuits, and algorithms described in connection with the aspects disclosed herein may be implemented as electronic hardware, instructions stored in memory or in another computer-readable medium and executed by a processor or other processing device, or combinations of both. For example, the initiator and target devices described herein may be employed in any circuit, hardware component, integrated circuit (IC), or IC chip. A processor is a circuit that can include a microcontroller, a microprocessor, or other circuits that can execute software or firmware instructions. A controller is a circuit that can include a microcontroller, a microprocessor, and/or dedicated hardware circuits (e.g., a field programmable gate array (FPGA)) that do not necessarily execute software or firmware instruction. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic devices, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The aspects disclosed herein may be embodied in hardware and in instructions that are stored in hardware and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of non-transitory computer-readable medium known in the art. An exemplary storage medium is coupled to the processor such that the processor can read information from and write information to the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flowchart diagrams may be subject to numerous different modifications, as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The previous description of the disclosure is provided to enable any person skilled in the art to make or use the disclosure. Various modifications to the disclosure will be readily apparent to those skilled in the art, and the generic principles defined herein may be applied to other variations. Thus, the disclosure is not intended to be limited to the examples and designs described herein but is to be accorded the widest scope consistent with the principles and novel features disclosed herein.

## Claims

1. A processing circuit configured to couple to a memory circuit, the processing circuit configured to:
execute a memory access instruction to access a first memory address of the memory circuit; and
in response to executing the memory access instruction:
receive, from the memory circuit, first tag bits associated with the first
memory address, wherein the tag bits are used to verify that accesses to the first memory address are authorized;
determine that the first tag bits are different than second tag bits in the memory access instruction; and
in response to a mode indicator indicating a first mode, compare the first tag bits to default tag bits.

2. The processing circuit of claim 1, the processing circuit further configured to, in response to the mode indicator indicating a second mode, generate an exception signal.

3. The processing circuit of claim 1, the processing circuit further configured to, in response to determining the first tag bits match the default tag bits, generate an alert.

4. The processing circuit of claim 1, the processing circuit further configured to, in response to determining the first tag bits match the default tag bits, complete execution of the memory access instruction.

5. The processing circuit of claim 1, the processing circuit further configured to, in response to determining the first tag bits are different than the default tag bits, generate an exception signal.

6. The processing circuit of claim 1, further comprising:
a first tag checking circuit configured to compare the first tag bits to the second tag bits to determine whether the first tag bits match the second tag bits; and
a second tag checking circuit configured to compare, in response to the mode indicator indicating the first mode, the first tag bits to the default tag bits.

7. A system comprising:
a memory circuit; and
a processing circuit according to any of preceding claims 1 - 6 coupled to the memory circuit.

8. The system of claim 7, further comprising:
a memory control circuit comprising an interface configured to couple to an external device,
wherein the memory control circuit is configured to:
receive, on the interface, data for storage in the memory circuit; and
store the data and the default tag bits in the memory circuit.

9. The system of claim 8, wherein the memory control circuit comprises a direct memory access (DMA) control circuit.

10. A method in a system including a processing circuit coupled to a memory circuit, the method comprising:
executing a memory access instruction to access a first memory address of the memory circuit; and
in response to executing the memory access instruction:
accessing first tag bits associated with the first memory address;
determining that the first tag bits are different than second tag bits in the memory access instruction; and
in response to a mode indicator indicating a first mode, comparing the first tag bits to default tag bits, wherein the tag bits are used to verify that accesses to the first memory address are authorized.

## Patentansprüche

1. Verarbeitungsschaltung, die konfiguriert ist zum Koppeln mit einer Speicherschaltung, wobei die Verarbeitungsschaltung konfiguriert ist zum:
Ausführen einer Speicherzugriffsanweisung, zum Zugreifen auf eine erste Speicheradresse der Speicherschaltung; und
als Antwort auf Ausführen der Speicherzugriffsanweisung:
Empfangen, von der Speicherschaltung, erster Tag-Bits, die mit der ersten Speicheradresse assoziiert sind, wobei die Tag-Bits verwendet werden zum Verifizieren, dass Zugriffe auf die erste Speicheradresse autorisiert sind;
Bestimmen, dass die ersten Tag-Bits unterschiedlich sind zu zweiten Tag-Bits in der Speicherzugriffsanweisung; und
als Antwort darauf, dass ein Modusindikator einen ersten Modus anzeigt, Vergleichen der ersten Tag-Bits mit Default-Tag-Bits.

2. Verarbeitungsschaltung nach Anspruch 1, wobei die Verarbeitungsschaltung ferner als Antwort darauf, dass der Modusindikator einen zweiten Modus anzeigt, zum Erzeugen eines Ausnahmesignals konfiguriert ist.

3. Verarbeitungsschaltung nach Anspruch 1, wobei die Verarbeitungsschaltung ferner als Antwort auf Bestimmen, dass die ersten Tag-Bits mit den Default-Tag-Bits übereinstimmen, zum Erzeugen eines Alarms konfiguriert ist.

4. Verarbeitungsschaltung nach Anspruch 1, wobei die Verarbeitungsschaltung ferner als Antwort auf Bestimmen, dass die ersten Tag-Bits mit den Default-Tag-Bits übereinstimmen, zum Abschließen des Ausführens der Speicherzugriffsanweisung konfiguriert ist.

5. Verarbeitungsschaltung nach Anspruch 1, wobei die Verarbeitungsschaltung ferner als Antwort auf Bestimmen, dass die ersten Tag-Bits unterschiedlich sind zu den Default-Tag-Bits, zum Erzeugen eines Ausnahmesignals konfiguriert ist.

6. Verarbeitungsschaltung nach Anspruch 1, ferner umfassend:
eine erste Tag-Prüfschaltung, die konfiguriert ist zum Vergleichen der ersten Tag-Bits mit den zweiten Tag-Bits, zum Bestimmen, ob die ersten Tag-Bits mit den zweiten Tag-Bits übereinstimmen; und
eine zweite Tag-Prüfschaltung, die konfiguriert ist zum Vergleichen, als Antwort darauf, dass der Modusindikator den ersten Modus anzeigt, der ersten Tag-Bits mit den Default-Tag-Bits.

7. System, umfassend:
eine Speicherschaltung; und
eine Verarbeitungsschaltung gemäß einem der vorhergehenden Ansprüche 1 bis 6, die mit der Speicherschaltung gekoppelt ist.

8. System nach Anspruch 7, ferner umfassend:
eine Speichersteuerschaltung, umfassend eine Schnittstelle, die konfiguriert ist zum Koppeln mit einer externen Vorrichtung, wobei die Speichersteuerschaltung konfiguriert ist zum:
Empfangen, an der Schnittstelle, von Daten zum Speichern in der Speicherschaltung; und
Speichern der Daten und der Default-Tag-Bits in der Speicherschaltung.

9. System nach Anspruch 8, wobei die Speichersteuerschaltung eine Direktspeicherzugriffs-(DMA) Steuerschaltung umfasst.

10. Verfahren in einem System, das eine Verarbeitungsschaltung enthält, die mit einer Speicherschaltung gekoppelt ist, wobei das Verfahren umfasst:
Ausführen einer Speicherzugriffsanweisung zum Zugreifen auf eine erste Speicheradresse der Speicherschaltung; und
als Antwort auf Ausführen der Speicherzugriffsanweisung:
Zugreifen auf erste Tag-Bits, die mit der ersten Speicheradresse assoziiert sind;
Bestimmen, dass die ersten Tag-Bits unterschiedlich sind zu zweiten Tag-Bits in der Speicherzugriffsanweisung; und
als Antwort darauf, dass ein Modusindikator einen ersten Modus anzeigt, Vergleichen der ersten Tag-Bits mit Default-Tag-Bits, wobei die Tag-Bits verwendet werden zum Verifizieren, dass Zugriffe auf die erste Speicheradresse autorisiert sind.

## Revendications

1. Circuit de traitement configuré pour être couplé à un circuit mémoire, le circuit de traitement étant configuré pour :
exécuter une instruction d'accès mémoire pour accéder à une première adresse mémoire du circuit mémoire ; et
en réponse à l'exécution de l'instruction d'accès mémoire :
recevoir, depuis le circuit mémoire, des premiers bits drapeaux associés à la première adresse mémoire, dans lequel les bits drapeaux sont utilisés pour vérifier que des accès à la première adresse mémoire sont autorisés ;
déterminer que les premiers bits drapeaux sont différents de deuxièmes bits drapeaux dans l'instruction d'accès mémoire ; et
en réponse à un indicateur de mode indiquant un premier mode, comparer les premiers bits drapeaux à des bits drapeaux par défaut.

2. Circuit de traitement selon la revendication 1, le circuit de traitement étant en outre configuré pour, en réponse à l'indicateur de mode indiquant un deuxième mode, générer un signal d'exception.

3. Circuit de traitement selon la revendication 1, le circuit de traitement étant en outre configuré pour, en réponse à la détermination que les premiers bits drapeaux correspondent aux bits drapeaux par défaut, générer une alerte.

4. Circuit de traitement selon la revendication 1, le circuit de traitement étant en outre configuré pour, en réponse à la détermination que les premiers bits drapeaux correspondent aux bits drapeaux par défaut, achever l'exécution de l'instruction d'accès mémoire.

5. Circuit de traitement selon la revendication 1, le circuit de traitement étant en outre configuré pour, en réponse à la détermination que les premiers bits drapeaux sont différents des bits drapeaux par défaut, générer un signal d'exception.

6. Circuit de traitement selon la revendication 1, comprenant en outre :
un premier circuit de vérification de drapeau configuré pour comparer les premiers bits drapeaux aux deuxièmes bits drapeaux afin de déterminer si les premiers bits drapeaux correspondent aux deuxièmes bits drapeaux ; et
un deuxième circuit de vérification de drapeau configuré pour comparer, en réponse à l'indicateur de mode indiquant le premier mode, les premiers bits drapeaux aux bits drapeaux par défaut.

7. Système comprenant :
un circuit mémoire ; et
un circuit de traitement selon l'une quelconque des revendications précédentes 1 - 6 couplé au circuit mémoire.

8. Système selon la revendication 7, comprenant en outre :
un circuit de commande de mémoire comprenant une interface configurée pour être couplée à un dispositif externe,
dans lequel le circuit de commande de mémoire est configuré pour :
recevoir, sur l'interface, des données pour stockage dans le circuit mémoire ; et
stocker les données et les bits drapeaux par défaut dans le circuit mémoire.

9. Système selon la revendication 8, dans lequel le circuit de commande de mémoire comprend un circuit de commande d'accès direct à la mémoire (DMA).

10. Procédé dans un système incluant un circuit de traitement couplé à un circuit mémoire, le procédé comprenant :
exécuter une instruction d'accès mémoire pour accéder à une première adresse mémoire du circuit mémoire ; et
en réponse à l'exécution de l'instruction d'accès mémoire :
accéder à des premiers bits drapeaux associés à la première adresse mémoire ;
déterminer que les premiers bits drapeaux sont différents de deuxièmes bits drapeaux dans l'instruction d'accès mémoire ; et
en réponse à un indicateur de mode indiquant un premier mode, comparer les premiers bits drapeaux à des bits drapeaux par défaut,
dans lequel les bits drapeaux sont utilisés pour vérifier que des accès à la première adresse mémoire sont autorisés.
